# EUROPÄISCHE PATENTSCHRIFT

(11) **EP 1 413 598 B1**
(45) Veröffentlichungstag und Bekanntmachung des Hinweises auf die Patenterteilung: **25.01.2006**
(21) Anmeldenummer: 02405903.2
(22) Anmeldetag: 22.10.2002
(51) Int. Cl.: C08J 9/20, C08J 9/14, C08J 9/00, C08L 33/02

(54) **Verfahren zur Herstellung von porösen Polymerteilchen auf Acrylat- und/oder Methacrylatbasis**
Process for producing acrylic or methycrylic based porous polymeric particles
Procédé de préparation de particules polymériques poreuses à base d'acrylate ou de méthycrylate

(43) Veröffentlichungstag der Anmeldung: 28.04.2004
(73) Patentinhaber: METROHM AG, 9100 Herisau (CH)
(72) Erfinder: Seubert, Andreas, 35043 Marburg (DE); Schütze, Sandra, 35041 Marburg (DE)
(74) Vertreter: Welch, Andreas

(56) Entgegenhaltungen:
- EP-A- 0 572 115
- WO-A-88/01164
- PATENT ABSTRACTS OF JAPAN vol. 1995, no. 07, 31. August 1995 (1995-08-31) & JP 07 109360 A (ARAKAWA CHEM IND CO LTD), 25. April 1995 (1995-04-25)

## Beschreibung

Die vorliegende Erfindung betrifft ein Verfahren zur Herstellung von porösen Polymerteilchen auf Acrylat- und/oder Methacrylatbasis unter Verwendung von mindestens einem Montoerpen als Porogen, die porösen Polymerteilchen sowie deren Verwendung zur Ionenchromatographie.

Sphärische poröse Polymere werden für eine Vielzahl von analytischen, technischen, medizinischen oder biologischen Anwendungen herangezogen. Beispielsweise sei der Einsatz als Matrices für Chromatographie-Verfahren (wie der Ionenchromatographie, Grössenausschluss- oder Affinitätschromatographie) erwähnt. Eine andere Einsatzmöglichkeit besteht in der Verwendung als sogenannte Drug Delivery Systems zur verbesserten Darreichung von Wirkstoffen, wie beispielsweise in der US-5,145,675 beschrieben. Weiterhin werden sphärische poröse Polymere zur Zellkultivierung herangezogen.

Die Eignung und Leistungsfähigkeit der sphärischen porösen Polymere bestimmt sich im wesentlichen durch die Partikelgrösse, die Art des Polymers (bzw. der Monomere, aus welchen es aufgebaut ist), die Partikelgrössenverteilung, die Porösität bzw. die Art der Poren, die Partikeloberfläche sowie die Quellfähigkeit. Die richtige Kombination dieser Faktoren ergibt für die jeweilige Applikation das entsprechende Polymer mit den gewünschten Eigenschaften.

Bei einer Polymerisation in wässriger Matrix kann durch Zugabe eines porenerzeugenden Stoffes, einem Porogen, zu der monomerhaltigen Reaktionsmischung eine poröse Struktur des entstehenden Polymers erzielt werden. Porogene wirken porenerzeugend, da sie während der Polymerisation das Volumen des wachsenden Teilchen vergrössern, ohne dabei aber selbst zu polymerisieren. Mit anderen Worten nehmen die Porogene innerhalb der wachsenden Teilchen Volumen ein, der von dem wachsenden Polymer nicht eingenommen werden kann. Nach Beendigung der Polymerisation wird das Porogen durch einen Extraktionsschritt aus dem Polymer entfernt. Die vom Porogen eingenommenen Volumina werden dadurch in Form von Hohlräumen frei.

Das Polymer ist aufgrund der Anwesenheit und des Einschlusses des Porogens verdünnt gewachsen. Man bezeichnet Porogene deshalb auch als "Verdünner".

Man unterscheidet je nach Wechselwirkung des Porogens mit dem wachsenden Polymer Solvent-Porogene, welche ein Lösungsmittel für das wachsende Polymer sind, sowie Non-Solvent-Porogene, welche kein Lösungsmittel für das wachsende Polymer sind. Ist das Porogen ein gutes Lösungsmittel für das wachsende Polymer, bilden sich feine makro- und mesoporöse Polymerbereiche aus. Dadurch wird eine gleichmässige Porenbildung auf und in stabilen Polymersphären möglich.

Als Porogene werden in der Regel organische Lösungsmittel wir Alkane, beispielsweise Hexan, Alkohole, beispielsweise Decanol, cycloaliphatische Alkohole, beispielsweise Cyclohexanol und Benzolderivate wie beispielsweise Toluol eingesetzt. Die Wahl des Porogens ist vom verwendeten Polymerisationsverfahren nahezu unabhängig und erfolgt in Abhängigkeit vom zu erzeugenden Polymer.

Für die Herstellung poröser sphärischer Polymere auf der Basis von Polystyrol-Divinylbenzol-Copolymeren werden bevorzugt Hexan und Toluol als Porogene eingesetzt. Mit Hilfe dieser Porogene ist die Porenerzeugung gut steuerbar. Insbesondere die Verwendung des als Lösungsmittel für das wachsende Polymer wirkenden Toluols ist hierbei bevorzugt.

Im Gegensatz hierzu sind die Probleme bei der Porenerzeugung von porösen sphärischen Polymeren auf der Basis von Acrylaten oder Methacrylaten nicht gelöst. Insbesondere bei der Verwendung polarer und/oder nichtvernetzender Acrylate oder Methacrylate wie beispielsweise Hydroxyacrylsäureestern oder - methacrylsaäureestern erhält man aufgrund der höheren Wasserlöslichkeit der kürzerkettigen Monomere Polymere mit unbefriedigenden Eigenschaften. Die Problematik beim Einsatz von Acrylaten oder Methacrylaten ist durch die im Vergleich zu Styrol und Divinylbenzol völlig verschiedenen chemischen und physikalischen Eigenschaften begründet.

In der Vergangenheit wurden zur Herstellung poröser sphärischer Polymere auf der Basis von Acrylaten bzw. Methacrylaten Alkohole wie 1-Decanol oder cycloaliphatische Alkohole wie Cyclohexanol als Porogene eingesetzt. Die daraus resultierenden Polymere sind jedoch von nicht zufriedenstellender Qualität.

Der Einsatz von Monoterpenen als Porogene zur Herstellung poröser sphärischer Polymere auf der Basis von Acrylaten bzw. Methacrylaten ist bislang nicht beschrieben worden.

In der WO 01/57133 sind thermoplastische schockbeständige Zusammensetzungen beschrieben, die neben Methacrylat-Monomeren auch Monoterpene als Transfermittel zur Einstellung des Molekulargewichts des Polymers (über Kettenabbruch) enthalten können. Beispiele hierfür sind aber nicht beschrieben. Die Monoterpene werden hier nicht als Porogene eingesetzt. Es ist auch kein Verfahren zur Herstellung poröser sphärischer Polymere beschrieben.

In der US-5,145,675 werden Mikrospheren bzw. poröse polymere Materialien unter anderem aus Methacrylaten hergestellt und als Vehikel für Controlled Relase-Fomulierungen, d.h. Formulierungen zur kontrollierten Freisetzung eines Arzneimittels eingesetzt. Als Porogen wird hier jedoch Toluol oder Heptan eingesetzt. Als Wirkstoffe bei Insektenmitteln werden unter anderem Terpene den fertigen sphärischen porösen Polymeren zugegeben. Ein Einsatz von Monoterpenen als Porogene ist nicht beschrieben.

Es war die Aufgabe der vorliegenden Erfindung, ein verbessertes Verfahren bereitzustellen, mit welchem poröse Polymerteilchen auf Acrylat- und/oder Methacrylatbasis hergestellt werden können.

Die Aufgabe wird gemäss der vorliegenden Erfindung durch ein Verfahren zur Herstellung von porösen Polymerteilchen auf Acrylat- und/oder Methacrylatbasis gelöst, umfassend die Schritte:
a) Bereitstellung einer Reaktionsmischung enthaltend mindestens ein Monomer ausgewählt aus der Gruppe bestehend aus Acrylat- und Methacrylatverbindungen, sowie mindestens ein Monoterpen als Porogen;
b) Polymerisierung unter Ausbildung von porösen Polymerteilchen auf Acrylat- und/oder Methacrylatbasis.

Es hat sich überraschend gezeigt, dass durch den Einsatz von Monoterpenen als Porogene zur Herstellung von porösen Polymerteilchen auf Acrylat- und/oder Methacrylatbasis gleichmässig poröse Teilchen mit einem grösseren Porenvolumen erhalten werden als dies bei alleiniger Verwendung herkömmlicher Porogene möglich ist. Insbesondere ist es möglich, auf diese Weise auch hydrophile Acrylate und/oder Methacrylate einzupolymerisieren, ohne dass dies zu Produkten mit unbefriedigenden Eigenschaften führt.

Die so erhaltenen Polymerteilchen lassen sich daher besonders gut als Basismaterial für die Ionenchromatographie einsetzen. Vorzugsweise enthält das Polymer bereits funktionalisierbare Gruppen, die für den Einsatz als Basismaterial für die Ionenchromatographie vorteilhaft sind. Beispielsweise können die erfindungsgemäss synthetisierten Polymere funktionelle gruppen wie tertiäre Amine aufweisen, die sich zu quartären Ammoniumgruppen umsetzen lassen.

Wie vorstehend beschrieben ist die Wirkung eines Porogens nahezu unabhängig vom verwendeten Polymerisationsverfahren. Erfindungsgemäss können beispielsweise die folgenden Polymerisationsverfahren herangezogen werden:

### Emulsionspolymerisation:

Ein Verfahren bei dem ungesättigte Monomere mit Hilfe eines Emulgators in eine kontinuierliche Phase (meist Wasser) dispergiert werden. Die Polymerisation wird meist thermisch durch den Zerfall eines Initiators (Radikalstarter) ausgelöst. Das Produkt ist eine kolloide Dispersion von Polymer, genannt Latex. Die resultierenden Partikel (Sphären) sind bis zu 500 nm groß. Im Falle eines porösen Produktes wird eine Monomer/Verdünner-Mischung verwendet.

### "Soapless" Emulsionspolymerisation:

Ein Verfahren das nach dem Mechanismus der Emulsionspolymerisation abläuft, jedoch ohne Emulgator auskommt. Der Latex enthält einheitlich große Partikel mit bis zu 1 µm Durchmesser. Im Falle eines porösen Produktes wird eine Monomer/Verdünner-Mischung verwendet.

### "Seeded" Emulsionspolymerisation:

In einer kontinuierlichen Phase (meist Wasser) wird ein Polymerlatex mit Monomer aufgequollen. Es kommen des weiteren Emulgator, Initiator und oberflächenaktive Hilfsstoffe zum Einsatz. Die Polymerteilchen sind einheitlich groß und von 3-50 µm Durchmesser. Im Falle eines porösen Produktes wird eine Monomer/Verdünner-Mischung verwendet.

### Zwei-Schritt-Quellverfahren nach Ugelstad:

Hier handelt es sich um eine spezielle Variante der "seeded" Emulsionspolymerisation. Die Besonderheit besteht darin, dass die Latexteilchen durch den Entropiegewinn bei Verwendung einer Emulsion aus einer unpolaren Substanz bzw. wasserunlöslichen Initiators größer quellbar werden. Das Produkt enthält absolut gleichgroße (monodisperse) Polymersphären Im Falle eines porösen Produktes wird eine Monomer/Verdünner-Mischung verwendet.

### Suspensionspolymerisation:

Ein ungesättigtes Monomer wird als diskontinuierliche Phase aus Tröpfchen in eine kontinuierliche Phase (meist Wasser) suspendiert (z.B. durch starkes Rühren). Die Polymerisation setzt als Folge des thermischen Zerfalls eines im Monomer löslichen Initiators ein. Das Produkt ist eine Suspension von polydispersen Polymerteilchen, der Größenbereich des Verfahrens liegt zwischen 5 und 200 µm Durchmesser. Im Falle eines porösen Produktes wird eine Monomer/Verdünner-Mischung verwendet.

### "Seeded" Suspensionspolymerisation:

Saatlatex wird in einer kontinuierlichen Phase mit Monomer aufgequollen und einer Suspensionspolymerisation unterzogen. Das Produkt ist ein monodisperses Polymer. Im Falle eines porösen Produktes wird eine Monomer/Verdünner-Mischung verwendet.

### Dispersionspolymerisation:

Es wird ein einphasiges System aus Monomer, Initiator, Hilfsstoffen und Lösungsmittel eingesetzt. Die Porosität des resultierenden Polymers hängt vom verwendeten Lösungsmittel ab.

In dem erfindungsgemässen Reaktionsmischung ist mindestens ein Monomer enthalten, das aus der Gruppe der Acrylat- bzw. Methacrylatverbindungen ausgewählt ist. Es kann sich hierbei um(Meth)acrylsäureester-Monomere handeln, beispielsweise um substituierte Ester der (Meth)acrylsäure und/oder um substituierte (Meth)acrylsäuren mit etwa 1 bis 18 Kohlenstoffatomen, vorzugsweise 1 bis 12 Kohlenstoffatomen. Erfindungsgemäss verwendbare Monomere umfassen Acrylsäure (Aac), Methacrylsäure (MMAc), Methyl(meth)acrylat, n-Butyl(meth)acrylat, Ethyl(meth)acrylat, 2-Methylbutyl(meth)acrylat, Isooctyl(meth)acrylat, 2-Ethylhexyl(meth)acrylat, Isononyl(meth)acrylat, Decyl(meth)acrylat, Dodecyl(meth)acrylat, Hexyl(meth)acrylat, Isobornyl(meth)acrylat, Octadecyl(meth)acrylat, Phenoxyethyl(meth)acrylat, alkoxylierte Alkyl(meth)acrylate wie Ethoxyethoxyethyl(meth)acrylat, Ethoxyethyl(meth)acrylat, Methoxyethyl(meth)acrylat, Methoxyethoxyethyl(meth)acrylat, Ethylenglykoldi(meth)acrylat (EGDMA), Diethylenglykoldi(meth)acrylat (DEGDMA), Triethylenglykoldi(meth)acrylat (TEGDMA), Glycidyl(meth)acrylat (GMA), Hydroxyethyl(meth)acrylat (HEMA), Methyl(meth)acrylat (MMA), Polymethyl(meth)acrylat (PPMMA), Hydroxypropyl(meth)acrylat (HPMA) und Gemische hiervon. Besonders bevorzugt ist gemäss der vorliegenden Erfindung die Verwendung mindestens eines (Meth)acrylats mit hydrophilen, vorzugsweise ausgeprägt hydrophilen Eigenschaften. Erfindungsgemäss sollen unter (Meth)acrylaten mit ausgeprägt hydrophilen Eigenschaften solche Verbindungen verstanden werden, die neben der Acrylatgruppe mindestens eine zusätzliche funktionelle Gruppe mit hydrophilem Charakter wie beispielsweise ein Hydroxygruppe umfasst. Ein Beispiel einer Verbindung mit ausgeprägtem hydrophilen Charakter ist Hydroxypropyl(meth)acrylat (HPMA).

Die Schreibweise (meth) bedeutet, dass neben den aufgeführten Methacrylverbindungen auch die entsprechenden Acrylverbindungen als genannt gelten sollen. Etwaig vorhandene Abkürzungen beziehen sich in diesen Fällen auf die entsprechenden Methacrylverbindungen.

Erfindungsgemäss bevorzugt ist die Verwendung von funktionellen (Meth)acryl-Monomeren mit einer funktionellen Gruppe, die sich in eine quartäre Ammoniumgruppe umwandeln lässt. Es kann sich hierbei beispielsweise um (Meth)acryl-Monomere mit einer tertiären Aminogruppe handeln. Die unter Verwendung derartiger Monomere erhältlichen sphärischen porösen Polymere sind insbesondere als Basismaterial für die Ionenchromatographie geeignet.

Von der vorliegenden Erfindung sind auch Copolymere aus zwei oder mehreren dieser Monomere umfasst. Weiterhin sind auch Copolymere von Acrylaten bzw. Methacrylaten mit anderen Monomeren wie beispielsweise Styrol oder Styrolderivaten wie Chlorstyrol oder Divinylbenzol von der vorliegenden Erfindung umfasst.

Gemäss der vorliegenden Erfindung wird der Reaktionsmischung zur Herstellung der porösen Polymere auf Acrylat- bzw. Methacrylatbasis mindestens ein Monoterpen als Porogen zugegeben. Terpene sind formal Polymerisationsprodukte von Isopren. Als Monoterpene bezeichnet man Verbindungen, die formal als Oligomere von zwei Isopreneinheiten aufgefasst werden können, also aus einem Gerüst aus 10 Kohlenstoffatomen bestehen.

Gemäss der vorliegenden Erfindung werden als Porogene vorzugsweise die folgenden Monoterpene eingesetzt: Citronellal, Carvon, Dihydrocarvon, Menthon, Cuminaldehyd, Thujon, Fenchon, Campher, Safranal, Borneol, Carveol, α-Terpineol, Dihydrocarveol, Geraniol, Nerol, Nerolidol, Citronellol, Lavandulol, Ipsdienol, Ipsenol, Piperitol, Pulegol, 1,8-Cineol, 1,4-Cineol, Linalool, Perillaalkohol, Myrcenol, Sabinenhydrat, Carvacrol, Thymol, Menthol, Camphen, Pinen, Limonen, α-Phellandren, β-Phellandren, Sabinen, Terpinen, Myrcen. Erfindungsgemäss besonders bevorzugt ist die Verwendung von Linalool als Porogen.

Durch den Einsatz von Monoterpenen als Porogene zur Herstellung von porösen Polymerteilchen auf Acrylat- und/oder Methacrylatbasis werden gleichmässig poröse Teilchen mit definierter Porenstruktur mit vorzugsweise einem grösseren Porenvolumen erhalten als dies bei alleiniger Verwendung herkömmlicher Porogene möglich ist. Monoterpene sind gute Lösungsmittel für wachsende Polymerteilchen auf Acrylat- und/oder Methacrylatbasis.

Gemäss einer bevorzugten Ausführungsform der vorliegenden Erfindung wird neben dem mindestens einem Montoterpen als Porogen noch mindestens ein weiteres Porogen zugegeben, das kein Monoterpen ist. Vorzugsweise wird ein organisches Lösungsmittel als weiteres Porogen zugegeben. Besonders bevorzugt wird ein organisches Lösungsmittel zugegeben, das aus der Gruppe bestehend aus Alkanen wie Hexan, Alkoholen wie Decanol, cyclischen Alkoholen wie Cyclohexanolen und aromatischen Kohlenwasserstoffen wie Toluol ausgewählt ist. Erfindungsgemäss insbesondere bevorzugt wird Toluol als zusätzliches Porogen zugegeben.

Der Einsatz eines zusätzlichen Porogens, das kein Monoterpen ist, ist besonders bei einem "seeded"-Polymerisationsverfahren wie dem Zwei-Schritt-Quellverfahren nach Ugelstad vorteilhaft, wenn als Saatmaterial Substanzen verwendet werden, für die Monoterpene nicht als Lösungsmittel wirken. Beispielsweise sind Monoterpene keine Lösungsmittel für Polystyrol-Saatteilchen. In diesem Fall sollte ein Porogen zugegeben werden, das als Lösungsmittel für diese Saatteilchen wirkt. Im Fall von Polystyrol-Saatmaterial kann beispielsweise Toluol als zusätzliches Porogen eingesetzt werden. Toluol ist ein Lösungsmittel für die Polystryol-Saatteilchen, aber nicht für das wachsende Polymer auf Acrylat- oder Methacrylatbasis. Andererseits ist das mindestens eine Monoterpen als Porogen ein Lösungsmittel für das wachsende Polymer auf Acrylat- oder Methacrylatbasis, aber nicht für die Polystryol-Saatteilchen. Es kommt somit zu einer Verkapselung der Saatteilchen im wachsenden Polymer auf Acrylat- oder Methacrylatbasis. Dies wird als "excluded seed" bezeichnet. Durch anschliessende Porenextraktion kann das verkapselte Saatmaterial entfernt werden. Es bleiben die leeren Poren zurück. Eine insbesondere hierfür erfindungsgemäss bevorzugte Kombination von Porogenen besteht in der Kombination von Linalool und Toluol.

Neben den Monomeren und dem Porogen weist die Reaktionsmischung zur Herstellung poröser sphärischer Polymere als weiteren Bestandteil einen Polymerisationsinitiator auf. Hierbei handelt es sich um Verbindungen, aus denen durch chemische, thermische oder photochemische Reaktionen eine aktive Spezies erzeugt werden kann, die mit einem Monomer reagiert und dadurch die eigentliche Polymerisationsreaktion auslöst. Die Polymerisation von Acryl- oder MethacrylMonomeren erfolgt hauptsächlich durch eine Radikalkettenpolymerisation. Als Initiatoren für Radikalkettenpolymerisationen können chemische Verbindungen eingesetzt werdne, die leicht Radikale bilden. Hierzu gehören Azo-Verbindungen, Peroxide, Hydroperoxide oder Persäureester. Einsetzbar sind aber auch Redox-Initiatoren. Diese bestehen aus oxidierenden und reduzierenden Komponenten. Durch Reaktion dieser Komponenten miteinander werden Radikale erzeugt. Ein typisches Redox-Initiator-System ist Wasserstoffperoxid in Verbindung mit Eisen-(II)-Ionen.

Die erfindungsgemässe Reaktionsmischung kann weiterhin Emulgatoren enthalten, wenn zur Herstellung ein Emulsionspolymerisationsverfahren zum Einsatz kommen soll. Es handelt sich hierbei um oberflächenaktive Stoffe wie beispielsweise Alkansulfonatsalze wie Natriumdodecylsulfat. Die Art und Auswahl geeigneter Emulgatoren in Abhängigkeit der eingesetzten Monomere ist dem Fachmann bekannt.

Die erfindungsgemässen Reaktionsmischungen können zusätzlich weitere Bestandteile wie beispielsweise Lösungsmittel, umfassen. Die Art und Auswahl geeigneter Zusatzstoffe ist dem Fachmann bekannt.

Die Durchführung der vorstehend aufgeführten Polymerisationsverfahren ist dem Fachmann bekannt. Bezüglich des Zwei-Schritt-Quellverfahrens nach Ugelstad wird auf die US-4,336,173 verwiesen, auf deren diesbezüglichen Inhalt hiermit ausdrückliche Bezug genommen wird.

Gemäss der vorliegenden Erfindung werden poröse sphärische Polymerteilchen auf Acrylat- und/oder Methacrylatbasis erhalten, die sich gegenüber porösen Polymerteilchen auf Acrylat- und/oder Methacrylatbasis, die auf herkömmlichen Weg erhalten wurden, durch eine gleichmässige und definierte Porenstruktur mit einem grösseren Porenvolumen auszeichnen. Die erfindungsgemässen Teilchen zeichnen sich durch einen Durchmesser von 2 bis 10 µm, vorzugsweise 3 bis 6 µm aus. Sie weisen ein Porenvolumen von 0,5 bis 2,0 mL/g Polymer, insbesondere von 0,8 bis 1,7 mL/g Polymer auf. Sie weisen ferner eine mittlere Porengrösse von 1 bis 25 nm, insbesondere von 2 bis 20 nm auf.

Bei dem erfindungsgemässen Verfahren fallen zusätzlich Sekundärteilchen als Nebenprodukte an. Diese zeichnen sich überraschend ebenfalls durch eine deutlich poröse Struktur aus.

Die erfindungsgemäss hergestellten porösen sphärischen Polymerteilchen auf Acrylat- bzw. Methacrylatbasis können beispielsweise als Matrices für Chromatographie-Verfahren (wie der Ionenchromatographie, Grössenausschluss- oder Affinitätschromatographie), als Drug Delivery Systems zur verbesserten Darreichung von Wirkstoffen, sowie zur Zellkultivierung herangezogen werden.

Die vorliegende Erfindung wird nachstehend anhand von nicht einschränkenden Beispielen näher erläutert.

### Beispiel 1

Monodisperses poröses EGDMA-HPMA-Copolymer von 4,5 µm Durchmesser wurde in Anlehnung an das Zwei-Schritt-Quell-Verfahren nach Ugelstad et. al., (beschrieben in US-4,336,173) hergestellt. Die Synthese erfolgt in einem zylindrischen, doppelwandigen Glasreaktor (Totalvolumen 950 mL) mit Deckel und 4-Flügelglasrührer unter Schutzgas.

10 mL einer hochdruckhomogenisierten Emulsion aus 15,78 g Perkadox SE-8 (Dioctanoylperoxid), 56,7 g Reinstwasser sowie 1,0 g Natriumdodecylsulfat wurden zu 12,5 mL Polystyrolsaatlatex (10%ig in Wasser, 1,5 µm Durchmesser) in 75 mL Reinstwasser unter leichtem Rühren bei 30°C zugegeben. 5 mL Aceton in 15 mL Reinstwasser gelöst wurden bei angehobener Rührgeschwindigkeit zugetropft. Nach 12-15 h unter leichtem Rühren bei 30°C wurde das Aceton mittels Vakuum (200-400 mbar) entfernt. Es erfolgte die Zugabe von 600 mg Berol 267 (Nonylphenol-ethoxylat) in 45 mL Reinstwasser, anschließend 100 mL Reinstwasser. Bei mittlerer Rührgeschwindigkeit wurde eine Monomer-Porogen-Mischung aus 27 mL EGDMA, 9 mL HPMA, 36 mL Toluol (Porogen 1) sowie 12 mL Linalool (Porogen 2) addiert. Nach 2-3 h war die organische Phase von den Saatteilchen aufgesaugt, es werden weitere 100 mL Wasser zugesetzt. Die Polymerisation erfolgte bei 65°C für 24 h bei höherer Rührgeschwindigkeit.

Es resultierte ein eher mikroporöses Polymer, bestehend aus zerbrochenen Hohlkugeln von 4,5 µm Durchmesser, sowie kleineren Sekundärteilchen von etwa 0,5 bis 1 µm (die Durchmesserbestimmung erfolgte über Rasterelektronenmikroskopie, REM). Das Porenvolumen, bestimmt mit Größenausschluss-Chromatographie (SEC), unter Verwendung von Polystyrolstandards und Alkylbenzolstandards (Eluent: Tetrahydrofuran), betrug 0,76 mL/g Polymer.

### Beispiel 2

Die Durchführung erfolgte wie in Beispiel 1 beschrieben. Die Monomer-Porogen-Mischung enthielt 27 mL EGDMA, 9 mL HPMA sowie 24 mL Toluol (Porogen 1) und 24 mL Linalool (Porogen 2). Das erhaltene Polymer wies unregelmäßige, deutlich makroporöse Teilchen von 3,5 µm sowie Sekundärteilchen auf.

### Beispiel 3

Die Durchführung erfolgte wie in Beispiel 1 beschrieben. Die Monomer-Porogen-Mischung enthielt 27 mL EGDMA, 9 mL HPMA sowie 12 mL Toluol (Porogen 1) und 36 mL Linalool (Porogen 2). Es wurden regelmäßige geformte makroporöse Partikel von 4,5 µm Durchmesser mit wenigen flachen lochartigen Fehlstellen, sowie Sekundärteilchen erhalten. Das Porenvolumen (SEC, Polystyrolstandards) betrug 1,01 mL/g Polymer.

### Beispiel 4

Die Durchführung erfolgte wie in Beispiel 1 beschrieben. Die Monomer-Porogen-Mischung enthielt 27 mL EGDMA, 9 mL HPMA sowie 48 mL Linalool (Porogen 2). Es wurden nahezu regelmäßig geformte meso-makroporöse Partikel von 4,5 µm Durchmesser mit wenigen oberflächlichen lochartigen Fehlstellen, sowie Sekundärteilchen erhalten. Das Porenvolumen (SEC, Polystyrolstandards) betrug 1,31 mL/g Polymer.

### Beispiel 5

Die Durchführung erfolgte wie in Beispiel 1 beschrieben. Die Monomer-Porogen-Mischung enthielt 27 mL EGDMA, 9 mL THFMA sowie 48 mL Linalool (Porogen 2). Anhand der mikroskopischen Beurteilung (REM) wurde ein Polymer entsprechend dem Polymer von Beispiel 4 erhalten.
Das Porenvolumen (SEC, Polystyrolstandards) betrug 1,30 mL/g Polymer.

### Beispiel 6

Die Durchführung erfolgte wie in Beispiel 1 beschrieben. Die Monomer-Porogen-Mischung enthielt 27 mL EGDMA, 9 mL Chloressigsäureallylester sowie 48 mL Linalool (Porogen 2). Das erhaltene Polymer war nahezu analog zu dem Polymer gemäss 4, die Fehlstellen waren jedoch tiefer. Es wurden viele Sekundärteilchen erhalten.
Das Porenvolumen (SEC, Polystyrolstandards) betrug 1,45 mL/g Polymer.

### Beispiel 7

Die Durchführung erfolgte wie in Beispiel 1 beschrieben. Die Monomer-Porogen-Mischung enthielt 27 mL EGDMA, 9 mL HEMA sowie 12 mL Toluol (Porogen 1) und 36 mL Linalool (Porogen 2). Es resultierten gleichmäßige Polymerkugeln von 4,5 µm Durchmesser mit sehr kleinen einschussartigen Fehlstellen, sowie Sekundärteilchen.
Die Polymerkugeln waren hohl.

### Beispiel 8

Die Durchführung erfolgte wie in Beispiel 1 beschrieben. Die Monomer-Porogen-Mischung enthielt 27 mL EGDMA, 9 mL HEMA sowie 48 mL Linalool (Porogen 2). Es wurden makroporöse, eher unregelmäßige Polymerkugeln von 4,5 µm Durchmesser mit deutlichen lochartigen Fehlstellen erhalten.
Das Porenvolumen (SEC, Polystyrolstandards) betrug 1,13 mL/g Polymer.

### Beispiel 9

Die Durchführung erfolgte wie in Beispiel 1 beschrieben. Die Monomer-Porogen-Mischung enthielt 27 mL EGDMA, 9 mL HPMA sowie 36 mL Toluol (Porogen 1) und 12 mL Geraniol (Porogen 3).
Das Porenvolumen (SEC, Polystyrolstandards) betrug 0,46 mL/g Polymer.

### Beispiel 10

Die Durchführung erfolgte wie in Beispiel 1 beschrieben. Die Monomer-Porogen-Mischung enthielt 27 mL EGDMA, 9 mL HPMA sowie 24 mL Toluol (Porogen 1) und 24 mL Geraniol (Porogen 3).
Das Porenvolumen (SEC, Polystyrolstandards) betrug 0,92 mL/g Polymer.

### Beispiel 11

Die Durchführung erfolgte wie in Beispiel 1 beschrieben. Die Monomer-Porogen-Mischung enthielt 27 mL EGDMA, 9 mL HPMA sowie 12 mL Toluol (Porogen 1) und 36 mL Geraniol (Porogen 3).
Das Porenvolumen (SEC, Polystyrolstandards) betrug 1,06 mL/g Polymer.

### Beispiel 12

Die Durchführung erfolgte wie in Beispiel 1 beschrieben. Die Monomer-Porogen-Mischung enthielt 27 mL EGDMA, 9 mL HPMA sowie 48 mL Geraniol (Porogen 3). Das Polymer wirkte glatter als das Polymer gemäss Beispiel 4, die Fehlstellen waren allerdings etwas tiefer. Es wurden zusätzlich Sekundärteilchen erhalten.

### Vergleichsbeispiel 1

Die Durchführung erfolgte wie in Beispiel 1 beschrieben. Die Monomer-Porogen-Mischung enthielt 27 mL EGDMA, 9 mL HPMA sowie 36 mL Toluol (Porogen 1) und 12 mL 1-Decanol. Die Teilchen waren nahezu regelmässig und makroporös. Es waren lochartige Strukturen erkennbar. Der Teilchendurchmesser betrug 4 µm.
Das Porenvolumen (SEC, Polystyrolstandards) betrug 0,72 mL/g Polymer.

### Vergleichsbeispiel 2

Die Durchführung erfolgte wie in Beispiel 1 beschrieben. Die Monomer-Porogen-Mischung enthielt 27 mL EGDMA, 9 mL HPMA sowie 12 mL Toluol (Porogen 1) und 36 mL 1-Decanol. Die Teilchen waren eher unregelmässige Kugeln mit groben Agglomeraten und makroporös. Der Teilchendurchmesser betrug 4 µm.
Das Porenvolumen (SEC, Polystyrolstandards) betrug 0,55 mL/g Polymer.

### Vergleichsbeispiel 3

Die Durchführung erfolgte wie in Beispiel 1 beschrieben. Die Monomer-Porogen-Mischung enthielt 27 mL EGDMA, 9 mL HPMA sowie 36 mL Toluol (Porogen 1) und 12 mL n-Hexan. Die Teilchen waren glatte Kugeln mit einer Wandstärke von 0,5 µm, die innen hohl waren. Der Teilchendurchmesser betrug 5 µm.
Das Porenvolumen (SEC, Polystyrolstandards) betrug 1,30 mL/g Polymer.

Ein Vergleich der Beispiele 1 und 2 mit den Vergleichsbeispielen 1 und 3 zeigt, dass die Verwendung eines Monoterpens als Porogen im Vergleich zur Verwendung von 1-Decanol zu gleichmässigen Teilchen mit höherem Porenvolumen führt. Die Verwendung von n-Hexan als Porogen zusätzlich zu Toluol führte gemäss Vergleichsbeispiel 3 zu inakzeptablen, instabilen Teilchen. Die gemäss den Vergleichsbeispielen erhaltenen Teilchen waren entweder deutlich unregelmässiger geformt oder Hohlkugeln und deswegen für eine technische Anwendung unbefriedigend.

## Patentansprüche

1. Verfahren zur Herstellung von porösen Polymerteilchen auf Acrylat- und/oder Methacrylatbasis, umfassend die Schritte:
a) Bereitstellung einer Reaktionsmischung enthaltend mindestens ein Monomer ausgewählt aus der Gruppe bestehend aus Acrylat- und Methacrylatverbindungen, sowie mindestens ein Monoterpen als Porogen;
b) Polymerisierung unter Ausbildung von porösen Polymerteilchen auf Acrylat- und/oder Methacrylatbasis.

2. Verfahren nach Anspruch 1, **dadurch gekennzeichnet dass** das oder die Monoterpene ausgewählt sind aus der Gruppe bestehend aus Citronellal, Carvon, Dihydrocarvon, Menthon, Cuminaldehyd, Thujon, Fenchon, Campher, Safranal, Borneol, Carveol, α-Terpineol, Dihydrocarveol, Geraniol, Nerol, Nerolidol, Citronellol, Lavandulol, Ipsdienol, Ipsenol, Piperitol, Pulegol, 1,8-Cineol, 1,4-Cineol, Linalool, Perillaalkohol, Myrcenol, Sabinenhydrat, Carvacrol, Thymol, Menthol, Camphen, Pinen, Limonen, α-Phellandren, β-Phellandren, Sabinen, Terpinen, Myrcen.

3. Verfahren nach Anspruch 2, **dadurch gekennzeichnet dass** das Monoterpen Linalool ist.

4. Verfahren nach einem der Ansprüche 1 bis 3, **dadurch gekennzeichnet dass** der Reaktionsmischung im Schritt a) ein zusätzliches Porogen zugegeben wird.

5. Verfahren nach Anspruch 4, **dadurch gekennzeichnet dass** das zusätzliche Porogen ein organisches Lösungsmittel ist.

6. Verfahren nach Anspruch 4 oder 5, **dadurch gekennzeichnet dass** das zusätzliche Porogen ausgewählt ist aus der Gruppe bestehend aus Alkanen wie Hexan, Alkoholen wie Decanol, cyclischen Alkoholen wie Cyclohexanolen und aromatischen Kohlenwasserstoffen wie Toluol.

7. Verfahren nach einem der Ansprüche 1 bis 6, **dadurch gekennzeichnet dass** die Reaktionsmischung als Porogene Linalool und Toluol enthält.

8. Verfahren nach einem der Ansprüche 1 bis 7, **dadurch gekennzeichnet, dass** das Verfahren ein Verfahren ausgewählt aus der Gruppe bestehend aus Emulsionspolymerisation, "soapless" Emulsionspolymerisation, "seeded" Emulsionspolymerisation, dem Zwei-Schritt-Quellverfahren nach Ugelstad, Multi-Step-Quellverfahren Suspensionspolymerisation, "seeded" Suspensionspolymerisation und Dispersionspolymerisation ist.

9. Verfahren nach Anspruch 8, **dadurch gekennzeichnet dass** das Verfahren ein Zwei-Schritt-Quellverfahren nach Ugelstad ist.

10. Verfahren nach einem der Ansprüche 1 bis 9, **dadurch gekennzeichnet dass** als Monomere Acrylate bzw. Methacrylate mit zusätzlichen funktionellen Gruppen eingesetzt werden.

11. Verfahren nach Anspruch 10, **dadurch gekennzeichnet, dass** sich die zusätzlichen funktionellen Gruppen zu quartären Ammoniumgruppen umwandeln lassen.

12. Verfahren nach einem der Ansprüche 1 bis 11, **dadurch gekennzeichnet**, das mindestens ein Acrylat oder Methacrylat mit ausgeprägten hydrophilen Eigenschaften eingesetzt wird.

13. Gleichmässig poröse Polymerteilchen auf Acrylat- und/oder Methacrylatbasis, erhältlich nach dem Verfahren gemäss einem der Ansprüche 1 bis 12.

14. Polymerteilchen nach Anspruch 13, **dadurch gekennzeichnet dass** es sich um ein Methacrylat-Copolymerisat handelt.

15. Polymerteilchen nach einem der Ansprüche 13 oder 14, **dadurch gekennzeichnet dass** es sich um gleichmässig poröse Teilchen mit einem Porenvolumen von 0,5 bis 2,0 mL/g Polymer, insbesondere von 0,8 bis 1,7 mL/g Polymer handelt.

16. Polymerteilchen nach einem der Ansprüche 13 bis 15, **dadurch gekennzeichnet dass** es sich um gleichmässig poröse Teilchen mit einer mittleren Porengrösse von 1 bis 25 nm, insbesondere von 2 bis 20 nm handelt.

17. Verwendung von porösen Polymerteilchen gemäss einem der Ansprüche 13 bis 16 zur Ionenchromatographie.

18. Verwendung von Monoterpenen als Porogene zur Herstellung von porösen Polymerteilchen auf Acrylat- oder Methacrylatbasis.

## Revendications

1. Procédé de préparation de particules polymères poreuses à base d'acrylate et/ou de méthacrylate, comprenant les étapes consistant à :
a) préparer un mélange réactionnel contenant au moins un monomère choisi dans le groupe constitué par des composés d'acrylate et de méthacrylate ainsi qu'au moins un monoterpène comme agent porogène ;
b) réaliser une polymérisation avec formation de particules polymères poreuses à base d'acrylate et/ou de méthacrylate.

2. Procédé selon la revendication 1, **caractérisé en ce que** le ou les monoterpène(s) est/sont choisi(s) dans le groupe constitué par le citronellal, la carvone, la dihydrocarvone, la menthone, l'aldéhyde de cumin, la thujone, 1a fenchone, le camphre, le safranal, 1e bornéol, le carvéol, l'α-terpinéol, le dihydrocarvéol, le géraniol, le nérol, le nérolidol, le citronellol, le lavandulol, l'ipsdiénol, l'ipsénol, le pipéritol, le pulégol, le 1,8-cinéol, le 1,4-cinéol, le linalool, l'alcool périllique, le myrcénol, l'hydrate de sabinène, le carvacrol, le thymol, le menthol, le camphène, le pinène, le limonène, l'α-phéllandrène, le β-phéllandrène, le sabinène, le terpinène, le myrcène.

3. Procédé selon la revendication 2, **caractérisé en ce que** le monoterpène est le linalool.

4. Procédé selon l'une des revendications 1 à 3, **caractérisé en ce que** l'on ajoute au mélange réactionnel de l'étape a) un agent porogène supplémentaire.

5. Procédé selon la revendication 4, **caractérisé en ce que** l'agent porogène supplémentaire est un solvant organique.

6. Procédé selon la revendication 4 ou 5, **caractérisé en ce que** l'agent porogène supplémentaire est choisi dans le groupe constitué par des alcanes tels que l'hexane, des alcools tels que le décanol, des alcools cycliques tels que les cyclohexanols et des hydrocarbures aromatiques tels que le toluène.

7. Procédé selon l'une des revendications 1 à 6, **caractérisé en ce que** le mélange réactionnel contient du linalool et du toluène comme agents porogènes.

8. Procédé selon l'une des revendications 1 à 7, **caractérisé en ce qu'**il s'agit d'un procédé choisi dans le groupe constitué par la polymérisation en émulsion, la polymérisation "sans savon" en émulsion, la polymérisation "ensemencée" en émulsion, le procédé de gonflement en deux étapes selon Ugelstad, le procédé de gonflement en plusieurs étapes, la polymérisation en suspension, la polymérisation "ensemencée" en suspension et la polymérisation en dispersion.

9. Procédé selon la revendication 8, **caractérisé en ce que** le procédé est un procédé de gonflement en deux étapes selon Ugelstad.

10. Procédé selon l'une des revendications 1 à 9, **caractérisé en ce que** l'on met en oeuvre en tant que monomères des acrylates ou des méthacrylates avec des groupes fonctionnels supplémentaires.

11. Procédé selon la revendication 10, **caractérisé en ce que** les groupes fonctionnels supplémentaires peuvent être transformés en groupes ammonium quaternaire.

12. Procédé selon l'une des revendications 1 à 11, **caractérisé en ce que** l'on met en oeuvre au moins un acrylate ou méthacrylate ayant des propriétés hydrophiles marquées.

13. Particules polymères poreuses uniformes à base d'acrylate et/ou de méthacrylate pouvant être obtenues avec le procédé selon l'une des revendications 1 à 12.

14. Particules polymères selon la revendication 13, **caractérisées en ce qu'**il s'agit d'un copolymérisat de méthacrylate.

15. Particules polymères selon l'une des revendications 13 et 14, **caractérisées en ce qu'**il s'agit de particules poreuses uniformes ayant un volume de pores de 0,5 à 2,0 ml/g de polymère, en particulier de 0,8 à 1,7 ml/g de polymère.

16. Particules polymères selon l'une des revendications 13 à 15, **caractérisées en ce qu'**il s'agit de particules poreuses uniformes ayant une taille de pores moyenne de 1 à 25 nm, en particulier de 2 à 20 nm.

17. Utilisation de particules polymères poreuses selon l'une des revendications 13 à 16 pour la chromatographie ionique.

18. Utilisation de monoterpènes en tant qu'agents porogènes pour la préparation de particules polymères poreuses à base d'acrylate ou de méthacrylate.

## Claims

1. Process for the preparation of porous acrylate- or methacrylate-based polymer particles, comprising the steps:
a) provision of a reaction mixture containing at least one monomer selected from the group consisting of acrylate and methacrylate compounds, and at least one monoterpene as porogen;
b) polymerization accompanied by development of porous acrylate- or methacrylate-based polymer particles.

2. Process according to claim 1, **characterized in that** the monoterpene or monoterpenes are selected from the group consisting of citronellal, carvone, dihydrocarvone, menthone, cuminaldehyde, thujone, fenchone, camphor, safranal, borneol, carveol, α-terpineol, dihydrocarveol, geraniol, nerol, nerolidol, citronellol, lavandulol, ipsdienol, ipsenol, piperitol, pulegol, 1,8-cineole, 1,4-cineole, linalool, perilla alcohol, myrcenol, sabinene hydrate, carvacrol, thymol, menthol, camphene, pinene, limonene, α-phellandrene, β-phellandrene, sabinene, terpinene, myrcene.

3. Process according to claim 2, **characterized in that** the monoterpene is linalool.

4. Process according to one of claims 1 to 3, **characterized in that** an additional porogen is added to the reaction mixture in step a).

5. Process according to claim 4, **characterized in that** the additional porogen is an organic solvent.

6. Process according to claim 4 or 5, **characterized in that** the additional porogen is selected from the group consisting of alkanes such as hexane, alcohols such as decanol, cyclic alcohols such as cyclohexanols and aromatic hydrocarbons such as toluene.

7. Process according to one of claims 1 to 6, **characterized in that** the reaction mixture contains linalool and toluene as porogens.

8. Process according to one of claims 1 to 7, **characterized in that** the process is a process selected from the group consisting of emulsion polymerization, "soapless" emulsion polymerization, "seeded" emulsion polymerization, the two-step swelling process according to Ugelstad, multi-step swelling process suspension polymerization, "seeded" suspension polymerization and dispersion polymerization.

9. Process according to claim 8, **characterized in that** the process is a two-step swelling process according to Ugelstad.

10. Process according to one of claims 1 to 9, **characterized in that** acrylates or methacrylates with additional functional groups are used as monomers.

11. Process according to claim 10, **characterized in that** the additional functional groups can be converted to quaternary ammonium groups.

12. Process according to one of claims 1 to 11, **characterized in that** at least one acrylate or methacrylate with pronouncedly hydrophilic properties is used.

13. Uniformly porous acrylate- and/or methacrylate-based polymer particles, obtainable according to the process according to one of claims 1 to 12.

14. Polymer particles according to claim 13, **characterized in that** they are a methacrylate copolymerizate.

15. Polymer particles according to one of claims 13 or 14, **characterized in that** they are uniformly porous particles with a pore volume of 0.5 to 2.0 ml/g polymer, in particular of 0.8 to 1.7 ml/g polymer.

16. Polymer particles according to one of claims 13 to 15, **characterized in that** they are uniformly porous particles with an average pore size of 1 to 25 nm, in particular of 2 to 20 nm.

17. Use of porous polymer particles according to one of claims 13 to 16 for ion chromatography.

18. Use of monoterpenes as porogens for the preparation of porous acrylate- or methacrylate-based polymer particles.
